Europäisches Patentamt

European Patent Office

Office européen des brevets

(11) Publication number: 0 369 735 A2

# EUROPEAN PATENT APPLICATION

(21) Application number: 89311762.2

(22) Date of filing: 14.11.89

(51) Int. Cl.5: G11B 7/08

(30) Priority: 14.11.88 US 270536

(43) Date of publication of application:
23.05.90 Bulletin 90/21

(84) Designated Contracting States:
DE FR GB IT NL

(71) Applicant: SEAGATE TECHNOLOGY, INC.
920 Disc Drive
Scotts Valley California 95066(US)

(72) Inventor: Lim, Kim Yong
Block 29, Kelantan Road No. 03-103
Singapore 0820(SG)
Inventor: Tay, Moon Hiong
Block 173, Ang Mo Kio Avenue 4 No. 07-727
Singapore 2056(SG)
Inventor: Ting, Ling Kim
Block 109, Bishan Street 12 No. 09-17
Singapore 2057(SG)
Inventor: Yeo, Seng Shew
37 Lorong, 24a Laylang Road
Singapore 1439(SG)

(74) Representative: Bayliss, Geoffrey Cyril et al
BOULT, WADE & TENNANT 27 Furnival Street
London EC4A 1PQ(GB)

(54) Low profile voice coil actuator for use in an optical data storage device.

(57) The disclosure relates to a positioning system for an optical disc drive which includes a mounting plate (10) for supporting a linear voice coil motor (18), and specifically for directly supporting the magnets (22) and frame (20) of the voice coil motor, the mounting plate further supporting a pair of guide rods (52, 54) which run from a point adjacent the voice coil motor to a point adjacent the optical data storage disc, the guide rods being used to support an optical transducer carriage (40) which positions an optical transducer relative to the track on the disc where information is to be accessed. The low profile voice coil motor includes a coil supporting structure (28) and voice coil (34) which is directly mounted to extended arms (42) on the optical transducer carriage, whereby the voice coil becomes an integral part of the transducer carriage, and is supported from the same guide rods which support the optical transducer carriage. With actuation of the coil in the voice coil motor, the voice coil is selectively positioned, thereby positioning the optical transducer carriage relative ot the optical disc for reading and writing information thereon.

FIG.-1

# LOW PROFILE VOICE COIL ACTUATOR FOR USE IN AN OPTICAL DATA STORAGE DEVICE

The invention is directed generally to an optical disc drive memory, and more particularly to a servo actuator and voice coil motor for use in such a memory. The invention is especially useful in an optical disc drive memory system significant portions of which are disclosed in our U.S. Patent Application Serial No. 270,760 and corresponding U.K. Patent Publication No. (Ref, 34585/000).

With the need for increasingly large capacity storage in personal computers to store both complex programs such as spreadsheets, relational data base management systems, and large amounts of data, the search for a solution has moved from floppy disc drives using removable magnetic media, to hard disc drives (also called Winchester-type disc drives). The area now being explored to further increase storage capacity is optical disc drives, using carriage-mounted optical transducers to read and record data from the storage disc. The difficulty with adoption of this technology, especially for use in personal com puters, has been cost. Typically optical disc drives are significantly more expensive than large capacity hard disc drives. However, they are obviously attractive because of their potential for providing very large storage capacity on a replaceable disc.

Therefore, it is an objective of the present invention to provide an economical optical disc drive.

Specifically, one of the obstacles in building an economical disc drive has been to provide a low profile disc drive which will fit easily in the slot provided in a personal computer for presently used 3.5-inch disc drives, while still achieving a low cost solution. Therefore, it is an objective of the present invention to provide a low profile optical disc drive, and specifically one incorporating a low profile actuator for positioning the transducer carriage relative to the disc for reading and writing information on the disc through the optical transducer. The carriage must be very stable and accurately positionable, because the data tracks on an optical storage disc are positioned very closely together.

The present invention comprises an improved positioning system for an optical disc drive which includes a mounting plate for supporting a linear voice coil motor, and specifically fcr directly supporting the magnets and frame of the voice coil motor, the mounting plate further supporting a pair of guide rods which run from a point adjacent the voice call motor to a point adjacent the optical data storage disc, the guide rods being used to support an optical transducer carriage which positions an optical transducer relative to the track on the disc where information is to be accessed. The low profile voice coil motor of this invention includes a coil supporting structure and voice coil which is directly mounted to extended arms on the optical transducer carriage, whereby the voice coil becomes an integral part of the optical transducer carriage, and is supported from the same guide rods which support the optical transducer carriage. With actuation of the coils in the voice coil motor, the voice coil is selectively positioned, thereby positioning the optical transducer carriage relative to the optical disc for reading and writing information thereon.

In a preferred embodiment of the invention, a spring-loaded self-aligned guiding mechanism includes spring-loaded bushings to maintain the alignment of the bushing, and thereby the voice coil and transducer carriage with the guide rods. The guide rods are accurately mounted within the chassis mounting plate by the use of a tapered screw screwed into the mounting plate directly adjacent an L-shaped reference surface, whereby as the screw is threaded into the mounting plate, it biases the guide rod in two dimensions into the corner defined by the reference surfaces, so that the guide rod may be quickly consistently and reliably mounted in the mounting plate.

Other features and advantages of the present invention will become more apparent from the following disclosure given with reference to the accompanying drawings.

FIG 1 is an exploded view of the essential elements of the low profile servo actuator of the present invention, including mounting plate, voice coil motor, and carriage;

FIG 2 is a sectional view of the voice coil motor of the present invention mounted in the mounting plate;

FIG 3 is a sectional view of the spring-loaded bushing incorporated in the present invention: and

FIG 4 is a sectional view of the means for aligning the guide rods in the mounting plate of the present invention.

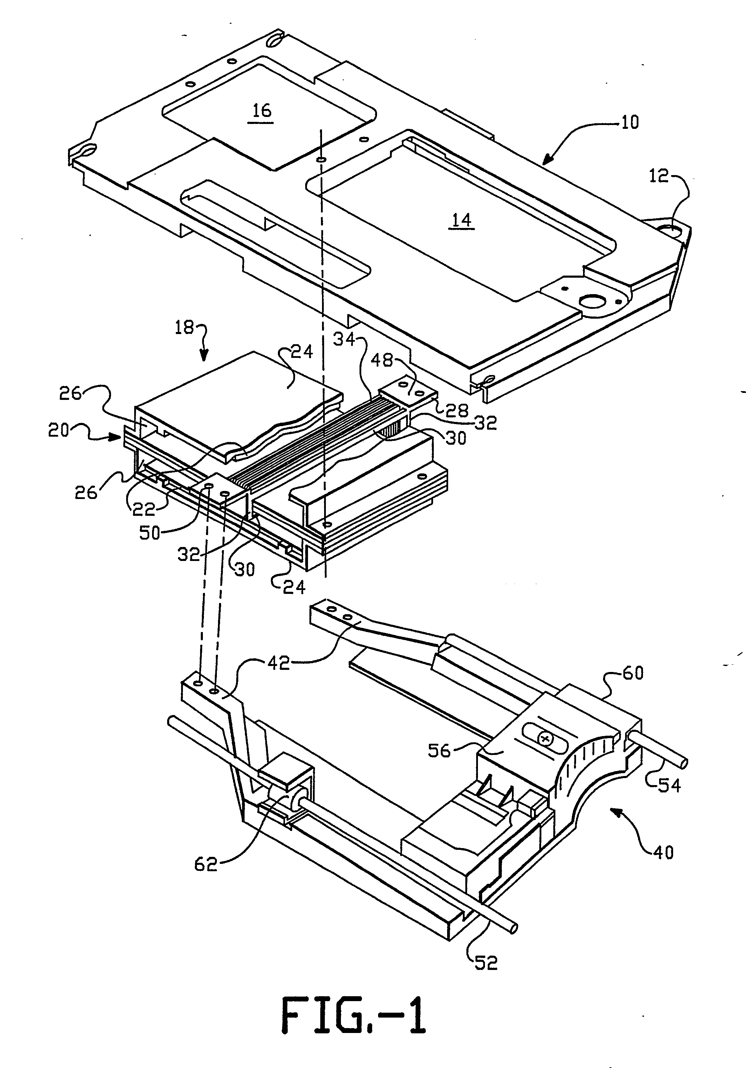

Referring now to the figures of this application, wherein like elements are assigned like reference numbers an optical disc memory apparatus is shown in exploded format in its essential elements in FIG 1. The apparatus includes a mounting plate 10 which is mounted to the chassis of the disc drive using shock mounts at points 12. The mounting plate 10 includes a first region 14 where the optical disc which comprises the storage medium is supported using an insert and ejection mechanism and spindle support as shown in the above cross-referenced application. The mounting plate 10 further includes a second region 16 for supporting a low profile linear voice coil motor 18 designed in accordance with the present invention.

The voice coil motor 18 for driving the optical transducer carriage 40, which will be discussed in detail below, is of generally symmetrical construction about the center portion 20 of the frame. The motor includes upper and lower magnets 22 supported from upper and lower frame pieces 24, the magnets being spaced from the center portion 20 of the voice coil frame structure to define openings 26 for movement of the coil holder 28. The coil holder 28 includes upper and lower coil support frame members 30 and sidewalls 32 to support the voice coil 34 thereon. In this way, all the heavy parts of the motor including the frame elements 20, 24 and magnets 22 are mounted stationary to the mounting plate 10, while only the light parts comprising the coil holder 28 and coil 34 are movable.

As pointed out above, the coil 34 and coil holder 28 slide back and forth in the openings 26 in response to selective energization of the coil 34. In order to maintain the alignment of the coil 34 and coil holder 28 in the openings 26, as well as directly convey the motion of the coil 34 to the optical transducer carriage 40, two drive arms 42 of the carriage 40 are directly mounted to extended members 48 which are extensions of the coil holder 28. The extended members 48 include screw holes 50 which overlie and are screwed tightly to screw holes 52 in drive arms 42, as indicated by the dashed lines 54 in FIG 1. Other appropriate means of attachment can be used. In this way, the voice coil 34 of the voice coil motor 18 is directly and tightly coupled to the optical transducer carriage 40 for positioning that optical transducer carriage 40 relative to the optical disc in the disc mounting region 14.

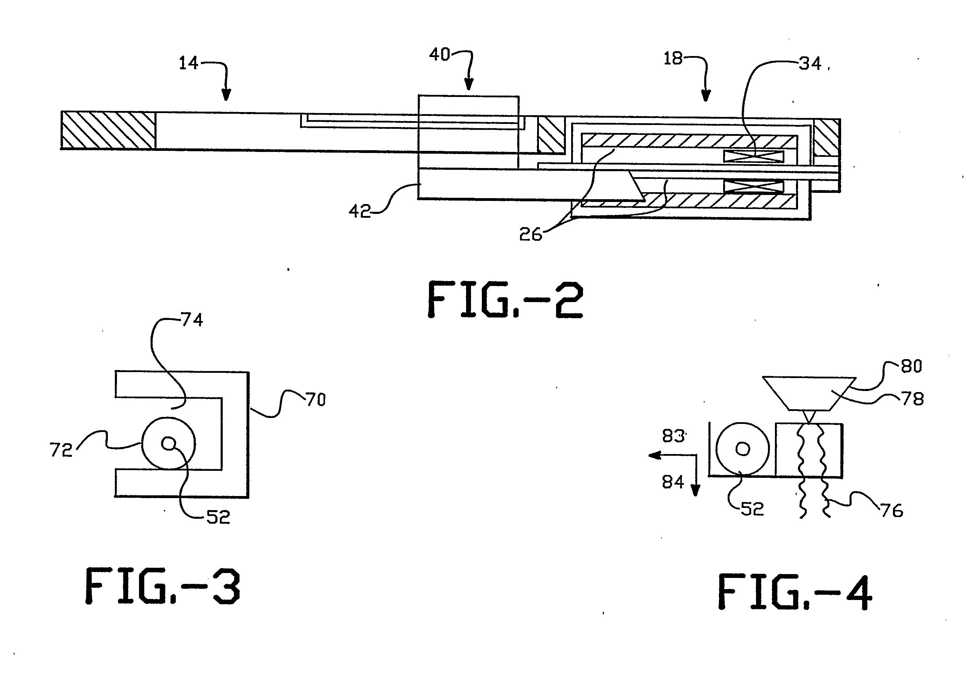

The relationship of these elements of the motor and carriage is also shown in the vertical sectional view of FIG 2, which clearly shows the coil 34 of the voice coil motor 18 sliding in the openings 26 of that motor. The arms 42 are shown extending parallel to the sides of the motor to be connected to the extended elements 48 of the coil holder 28 (FIG 1). FIG 2 also illustrates how the optical transducer carriage 40, as driven by these arms 42, is supported from the guide rods 52, 54 which extend from points adjacent to the voice coil motor across the opening 14 where the optical disc is supported so that the transducer support mechanism 56 of the optical transducer carriage 40 can selectively position this transducer support mechanism 56 relative to the disc.

As also shown in FIG 1, the optical transducer carriage 40 is supported from these guide rods 52, 54 at two points, including bushings 60 immediately adjacent the transducer support mechanism 56, and spring-loaded guiding mechanism 62 spaced a distance away from the transducer support mechanism 56 toward the voice coil motor 18. The use of this four-point support using bushings 60, 62 establishes and maintains the alignment of the voice coil holder 28 within the openings 26 without the need of any additional further support for the voice coil 34. The use of spring-loaded self-aligning bushings to support the optical transducer carriage 40 provides a self-aligning mechanism for the transducer support mechanism 56 and for the coil holder 28, so that the voice coil 34 moves freely in the openings 26 without bending, twisting or binding, and so that the optical transducer alignment mechanism can reliably position the transducer over the optical disc.

The spring-loaded bushing of the present invention is as illustrated in FIG 3. It comprises a simple U-shaped frame 70 supporting the bushing 72 and spring-loading means 74, the bushing riding over the guide rod 52. In this way, the bushing is spring-loaded against the top of the laser transducer carriage, whereby the carriage floats, the guide rod is fixed, and the bushing and guide rod combination is thereby fixed to provide a consistent, positive alignment of the carriage and the transducer support mechanism relative to the optical disc to be accessed.

The guide rods 52, 54 are fixed to the mounting plate 10 using the arrangement shown in FIG 4. Specifically, the mounting plate has defined therein L-shaped corner support sections for the ends of the guide rod 52, these L-shaped portions being very precisely machined to accurately locate the position of the guide rod. A hole is drilled and tapped adjacent the targeted location of the guide rod, and a flathead screw 80 is inserted in the housing. As the screw 80 is inserted in the mounting plate 10, the tapered head 78 presses against the guide rods 52, 54, pushing the rod across and down as shown by the arrows 83 and 84, respectively, to press the guide rod 52, 54 against the dual reference surfaces, and very precisely and tightly align the guide rods 52, 54 within the mounting plate 10. In this way, the guide rods 52, 54 with the optical transducer carriage 40 and voice coil 34 for the voice coil motor 18 are precisely and permanently aligned within the mounting plate 10 with the use of a minimum number of screws and other attachments.

This assembly is both inexpensive, accurate and reliable, and thereby provides an economical structure in a low profile optical media disc drive system.

Alternatives to the present invention may become apparent to a person of skill in the art who studies the present invention disclosure. Therefore, the scope of the invention is to be limited only by the following claims.

**Claims**

1. An optical disc drive including a mounting plate for supporting a linear voice coil motor, including directly supporting the magnets and frame of the voice coil motor, the mounting plate further supporting a pair of guide rods which run from a point adjacent the voice coil motor to a point adjacent an optical data storage disc, the guide rods being used to support an optical transducer carriage which positions an optical transducer relative to the track on said disc where information is to be accessed, the low profile voice coil motor of this invention includes a coil supporting structure and voice coil directly mounted to extended arms on the optical transducer carriage, whereby the voice coil becomes an integral part of said optical transducer carriage, and is supported from said guide rods which support said optical transducer carriage, whereupon in response to actuation of said coil in said voice coil motor, said voice coil is selectively positioned, thereby positioning said optical transducer carriage relative to said optical disc for reading and writing information thereon.

FIG.-1

FIG.-2

FIG.-3

FIG.-4

EP 0 369 735 A2